(19) Europäisches Patentamt
European Patent Office
Office européen des brevets

(11) Veröffentlichungsnummer: **0 001 811**
**B1**

(12) # EUROPÄISCHE PATENTSCHRIFT

(21) Anmeldenummer: **78101242.2**

(22) Anmeldetag: **27.10.78**

(51) Int. Cl³: **C 07 F 9/38, C 02 F 5/02**

(54) **N-Sulfohydroxyalkan-aminoalkanphosphonsäuren und ihre Salze, Verfahren zu ihrer Herstellung und ihre Verwendung als Komplexierungsmittel**

(30) Priorität: **28.10.77 DE 2748366**

(43) Veröffentlichungstag der Anmeldung:
**16.05.79 Patentblatt 79/10**

(45) Bekanntmachung des Hinweises auf die Patenterteilung:
**23.07.80 Patentblatt 80/15**

(84) Benannte Vertragsstaaten:
**BE CH DE FR GB LU NL SE**

(56) Entgegenhaltungen:
**DE - A - 2 325 829**
**DE - A - 2 504 724**
**DE - A - 2 531 104**
**US - A - 4 085 134**

(73) Patentinhaber: **Benckiser-Knapsack GmbH**
**Dr. Albert-Reimann-Strasse 2**
**D - 6800 Ladenburg (DE)**

(72) Erfinder: **Sommer, Klaus, Dr.**
**Sandwingert 39**
**D - 6900 Heidelberg (DE)**
**Weber, Hermann, Dr.**
**Schlosstrasse 43**
**D - 6944 Hemsbach (DE)**

(74) Vertreter: **Zellentin, Rüdiger, Dr.**
**Zweibrückenstrasse 15**
**D - 8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 811 B1

# N-Sulfohydroxyalkan-aminoalkanphosphonsäuren und ihre Salze, Verfahren zu ihrer Herstellung und ihre Verwendung als Komplexierungsmittel

Die Erfindung betrifft N-Sulfohydroxyalkan-aminoalkanphosphonsäuren bzw. ihre Salze, ein Verfahren zu ihrer Herstellung sowie ihre Verwendung als Komplexierungsmittel.

Die erfindungsgemäßen N-Sulfohydroxyalkan-aminoalkanphosphonsäuren lassen sich durch die allgemeine Formel 1 beschreiben

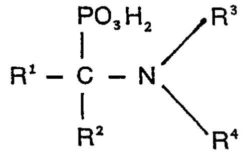 (1)

in der die Reste wie folgt definiert sind:

$R^1$: ein Wasserstoffatom, ein Alkylrest mit 1 bis 11 Kohlenstoffatomen, insbesondere ein Methyl- oder Äthylrest, ein Arylrest, insbesondere ein Phenyl-, Tolyl- oder Chlorphenylrest, ein Aralkylrest, insbesondere ein Benzylrest, ein Cycloalkylrest, insbesondere ein Cyclohexylrest, ein Aminoalkylenrest, insbesondere ein Aminomethylenrest, ein Hydroxyalkylenrest, insbesondere ein Hydroxymethylen- oder Hydroxyäthylenrest, ein Carboxyalkylenrest, insbesondere ein Carboxymethylenrest, oder ein niedriger Alkylphosphonsäurerest, insbesondere ein Äthylphosphonsäurerest $—C_2H_4PO_3H_2$;

$R^2$: ein Wasserstoffatom oder der Phosphonsäurerest $—PO_3H_2$;

$R^3$: ein Hydroxyalkansulfonsäurerest $C_nH_{2n-1}(OH)SO_3H$ mit n = 3 bis 18, oder ein niedriger Alkylphosphonsäurerest, insbesondere ein Methylphosphonsäurerest $—CH_2PO_3H_2$;

$R^4$: ein Wasserstoffatom, wenn $R^3$ nicht gleichzeitig ein niedriger Alkylphosphonsäurerest ist, oder ein Hydroxyalkansulfonsäurerest $C_nH_{2n-1}(OH)SO_3H$ mit n = 3 bis 18.

Die erfindungsgemäßen Verbindungen unterscheiden sich von den bisher bekannten Aminoalkanphosphonsäuren dadurch, daß ein oder beide Wasserstoffatome am Stickstoff durch Sulfohydroxyalkanreste ersetzt sind.

Von den in der deutschen Patentanmeldung P 27 13 827.8 angegebenen N-Sulfoalkanaminoalkanphosphonsäuren unterscheiden sich die erfindungsgemäßen Verbindungen durch zusätzliche Hydroxylgruppen in den an das N-Atom gebundenen Sulfoalkanresten.

Zur Herstellung der erfindungsgemäßen Verbindungen setzt man Salze von Aminophosphonsäuren der allgemeinen Formel 2

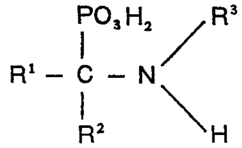 (2)

in der die Reste wie folgt definiert sind:

$R^1$: ein Wasserstoffatom, ein Alkylrest mit 1 bis 11 Kohlenstoffatomen, insbesondere ein Methyl- oder Äthylrest, ein Arylrest, insbesondere ein Phenyl-, Tolyl- oder Chlorphenylrest, ein Aralkylrest, insbesondere ein Benzylrest, ein Cycloalkylrest, insbesondere ein Cyclohexylrest, ein Aminoalkylenrest, insbesondere ein Aminomethylenrest, ein Hydroxyalkylenrest, insbesondere ein Hydroxymethylen-oder Hydroxyäthylenrest, ein Carboxyalkylenrest, insbesondere ein Carboxymethylenrest, oder ein niedriger Alkyl-phosphonsäurerest, insbesondere ein Äthylphosphonsäurerest $—C_2H_4PO_3H_2$;

$R^2$: ein Wasserstoffatom oder der Phosphonsäurerest $—PO_3H_2$;

$R^3$: ein Wasserstoffatom oder ein niedriger Alkylphosphonsäurerest, insbesondere ein Methylphosphonsäurerest $—CH_2PO_3H_2$, in alkalischem Medium bei einem pH-Wert oberhalb 9 mit Salzen von Alkansulfonsäuren, deren Ketten 3 bis 18 Kohlenstoffatome enthalten und die einen austauschbaren Substituenten wie Halogen oder ein Epoxygruppe aufweisen, bei Siedetemperatur der Lösung oder unter Druck bei Temperaturen zwischen 110° und 150°C um. Zur Umsetzung werden Phosphonsäuren und Alkansulfonate im Molverhältnis von 1:1 bis 1:2, vorzugsweise 1:1 bis 1:1,5 zur Reaktion gebracht.

Als Phosphonsäure-Komponente eigenen sich ganz allgemein alle Aminoalkan-phosphonsäuren, die mindestens einen substituierbaren Wasserstoff an der Stickstoff-Gruppe tragen und die der vorstehenden Formel entsprechen. Im einzelnen sind es:

Die Natrium- oder Kaliumsalze der Aminomethan - phosphonsäure, der 1 - Aminoäthan-2 - phosphonsäure, der Imino - bis - methanphosphonsäure sowie 1 - Aminoalkan - 1,1 - diphosphonsäuren beispielsweise Aminomethandiphosphonsäure, 1 - Aminoäthan - 1,1 - diphosphonsäure, 1 - Aminopropan - 1,1 - diphosphonsäure, Benzylaminodiphosphonsäure, 1,2 - Diaminoäthan - 1,1 - diphosphonsäure, 3 - Hydroxy - 1 - aminopropan - 1,1 - diphosphonsäure, 2 - Carboxy - 1 - aminoäthan-1,1 - diphosphonsäure, 1 - Hydroxy - 3 - aminopropan - 1,1 - diphosphonsäure und 1 - Aminopropan - 1,1,3 - triphosphonsäure.

Bevorzugt werden Alkalisalze der 2,3-Epoxypropan-1-sulfonsäure eingesetzt, die man aus Epichlorhydrin und Alkalisulfit $Me_2SO_3$ leicht herstellen kann. Andere Epoxysulfonate, die der Umsetzung zugänglich sind, wie zum Beispiel 2,3-Epoxyhexan-1-sulfonat, 2,3-Epoxyhexan-4-sulfonat, 1,2-Epoxyoctan-3-sulfonat, 2,3-Epoxyundekan-1-sulfonat, 2,3-Epoxydodekan-1-sulfonat und 9,10-Epoxyoctadekan-1-sulfonat, erhält man durch Epoxydieren von Alkensulfonaten nach herkömmlichen Methoden.

Ein weiterer Weg zur Gewinnung von Sulfohydroxyalkan - aminoalkanphosphonsäuren besteht in der Umsetzung von Chlor-hydroxyalkansulfonaten in alkalischem Medium mit Aminophosphonsäuren bei Temperaturen zwischen 90 und 150°C. Vorteilhaft arbeitet man bei 100 bis 130°C in Druckgefäßen.

Alkalichlor - hydroxysulfonate, welche verwendet werden können, sind beispielsweise 2 - Hydroxy - 3 - chlorpropan - 1 - sulfonat, 3-Hydroxy - 4 - chlorbutan - 1 - sulfonat, 2-Hydroxy - 3 - chlorbutan - 1 - sulfonat und 2-Methyl - 2 - hydroxy - 3 - chlorpropan - 1 - sulfonat.

Die neuen Phosphonsäuren zeichnen sich dadurch aus, daß sie gute Komplexbildner gegenüber 2- und mehrwertigen Metall-Ionen sind, und sie lassen sich mit Vorteil überall da einsetzen, wo ein gutes Komplexbindevermögen gegenüber mehrwertigen Metall-Ionen erforderlich ist. Besonders hervorzuheben ist noch ihre Hydrolysebeständigkeit bei hohen Temperaturen, so daß sie in all den Fällen einsetzbar sind, in denen auch Temperaturen über 100°C angewandt werden.

So können sie in allen Medien Verwendung finden, in denen die Härtebildner des Wassers stören oder in denen Einflüsse von mehrwertigen Metall-Ionen ausgeschaltet werden sollen. Im einzelnen sind hier die Aufbereitung von hartem Wasser, Textilbehandlungsbäder, die Papierherstellung und die Gerbung zu nennen.

Auch eignen sich diese Phosphonsäuren zur Stabilisierung der Wasserhärte in unterstöchiometrischen Mengen, d.h. zur Durchführung des sogenannten "Schwellen-Verfahrens".

Die neuen Phosphonsäuren vereinigen in sich sowohl die Eigenschaften von solchen Verbindungen, die Hydroxy- oder Amino-Gruppen tragen. Besonders hervorzuheben ist die außerordentlich gute Löslichkeit der freien Säuren in wäßrigen Medien, die den meisten bisher bekannten Aminophosphonsäuren fehlt. So lösen sich von den in den Beispielen beschriebenen Verbindungen im Mindestfall 100 g/100 ml. Dadurch eignen sich die erfindungsgemäßen Verbindungen ausgezeichnet zur Flüssigdosierung, die bei den bisher für ähnliche Zwecke eingesetzten schlechter löslichen Phosphonsäureverbindungen aufgrund der erforderlichen größeren Lösungsmittelmengen und der Empfindlichkeit der Lösungen gegen Beimengungen von Verunreinigungen mit Schwierigkeiten verbunden war.

Nachfolgend werden die Verfahren zur Herstellung der erfindungsgemäßen Verbindungen sowie deren Verwendung anhand von Ausführungsbeispielen näher erläutert.

### Beispiel 1

48 g Aminomethan-diphosphonsäure und 57 g KOH werden in 200 ml Wasser gelöst und zusammen mit 42 g Natriumepoxypropan-sulfonat 6 bis 8 Stunden unter Rückfluß gekocht. Man neutralisiert mit Essigsäure und behandelt die Lösung zur Entfernung der Alkali-Ionen mit einem Kationen-austauscher. Nach Eindampfen der erhaltenen Lösung wird der Rückstand, der in der Hauptsache aus N-Sulfohydroxy - propan - aminomethan - diphosphonsäure besteht, mit Methanol gewaschen und getrocknet.

Ausbeute: 72 g
Analyse: gef.:
C: 15,0 %, N: 4,3 %, P: 18,6 %, S: 9,9 %
ber.:
C: 14,60%, N: 4,26%, P: 18,82%, S: 9,74%.

Die in untergeordneten Mengen gebildete Bis(N - sulfohydroxypropan) - aminomethandiphosphonsäure konnte sowohl durch Dünnschicht- als auch durch Säulen-Chromatographie isoliert und analytisch identifiziert werden.

Analyse: gef.:
N: 3,2%, P: 13,4%, S: 13,0%.

### Beispiel 2

Analog zu Beispiel 1 erhält man aus 50 g 1 - Aminoäthan - 1,1 - diphosphonsäure durch Umsetzung mit Natrium - epoxypropan - sulfonat in 68 %iger Ausbeute die N - Sulfohydroxypropan - 1 - aminoäthan - 1,1 - diphosphonsäure.

Analyse: gef.: N: 4,3 %, P: 18,1 %, S: 9,1 %
ber.: N: 4,08%, P: 18,05%, S: 9,34%.

Als weiteres Produkt bildet sich, insbesondere bei Erhöhung der Epoxypropansulfonat-Menge, Bis(N - sulfohydroxypropan) - 1 - aminoäthan - 1,1 - diphosphonat.

### Beispiel 3

Analog zu Beispiel 1 erhält man bei der Umsetzung von 60 g 2 - Carboxy - 1 - aminoäthan-1,1 - diphosphonsäure mit Natrium - epoxypropan - sulfonat in 66 %iger Ausbeute die N-sulfohydroxypropan - 2 - carboxy - 1 - aminoäthan - 1,1 - diphosphonsäure.

### Beispiel 4

Bei der Umsetzung von 51 g Imino-bismethylenphosphonsäure mit Natrium - epoxypropan - sulfonat analog Beispiel 1 erhält man in 75 %iger Ausbeute die N - Bis(phosphonomethyl) - 3 - amino - 2 - hydroxy - propan - 1-sulfonsäure.

Analyse: gef.: N: 4,1 %, P: 17,8 %, S: 9,4 %
ber.: N: 4,08%, P: 18,05%, S: 9,34%.

### Beispiel 5

Das Tetrakaliumsalz aus 50 g Aminoäthan-1,1 - diphosphonsäure wird zusammen mit 56 g Kalium - 2,3 - epoxyhexan - 1 - sulfonat in einem Autoklaven 3 Stunden lang auf 130 bis

135°C erhitzt. Nach Abkühlen des Druckgefäßes wird, wie unter Beispiel 1 beschrieben, weiter verfahren. Es werden 68 g N - (1 - Sulfohydroxyhexan) - 1 - aminoäthan - 1,1 - diphosphonsäure erhalten.

Analyse: gef.: N: 3,8 %, P: 15,9 %, S: 8,5 %
ber.: N: 3,63%, P: 16,04%, S: 8,30%.

Beispiel 6

In einem rührbaren Druckgefäß werden 48 g Aminomethan-diphosphonsäure, 72 g KOH und 58 g Kalium - 2 - methyl - 2 - hydroxy - 3-chlor - propan - 1 - sulfonat in 500 ml Wasser gelöst. Unter Rühren wird die Mischung 4 Stunden auf 130 bis 135°C erhitzt. Nach dem Abkühlen wird mit Salzsäure schwach angesäuert, falls erforderlich, von ausgefallener Aminomethan-diphosphonsäure abfiltriert und zur Gewinnung der freien N - (1 - Sulfo - 2-methyl - 2 - hydroxy - propan) - aminomethan-diphosphonsäure, wie in Beispiel 1, verfahren.

Ausbeute: 74%
Analyse: gef.: N: 4,2 %, P: 18,0 %, S: 9,6 %
ber.: N: 4,08%, P: 18,05%, S: 9,34%.

Beispiel 7

Analog zu Beispiel 6 erhält man aus Kalium-2 - hydroxy - 3 - chlor - butan - 1 - sulfonat die N - (1 - Sulfo - 2 - hydroxy - butan) - aminomethan - diphosphonsäure.

Beispiel 8

51 g 1 - Aminoäthan - 1,1 - diphosphon säure werden mit 87 g KOH in 400 ml Wasser gelöst. Unter kräftigem Rühren tropft man 40 g 3,4 - Epoxy - butan - 1 - sulfonsäure, gelöst in 80 ml Wasser, zu und kocht anschließend 7 Stunden unter Rückfluß. Die weitere Aufarbeitung des Reaktionsgemisches erfolgt wie in Beispiel 1 beschrieben. Man erhält N - (1 - Sulfo - hydroxybutan) - 1-aminoäthan - 1,1 - diphosphonsäure.

Analyse: gef.: N: 4,0 %, P: 17,3 %, S: 9,2 %
ber.: N: 3,92%, P: 17,34%, S: 8,98%.

Beispiel 9

Werden beim Arbeiten gemäß Beispiel 8 anstelle von Epoxybutansulfonsäure 52 g 1,2 Epoxyoctan - 3 - sulfonsäure eingesetzt, so erhält man die N - (Sulfohydroxy - pentyl - propan) - 1 - aminoäthan - 1,1 - diphosphonsäure.

Analyse: gef.: N: 3,5 %, P: 15,2 %, S: 7,5 %
ber.: N: 3,39%, P: 14,99%, S: 7,76%.

Beispiel 10

Bei Verwendung von 65 g 2,3 - Epoxy - undecan - sulfonsäure erhält man analog zu Beispiel 8 92 g N - (Sulfo - hydroxy - undecan)-1 - aminoäthan - 1,1 - diphosphonsäure.

Analyse: gef.: N: 3,2 %, P: 13.4 %, S: 7,4 %
ber.: N: 3,08%, P: 13,60%, S: 7,04%.

Beispiel 11

Man schlämmt 53,5 g Phenyl - aminomethan - diphosphonsäure und 36 g 2-Hydroxy - 3 - chlor - propan - 1 - sulfonsäure in 200 ml Wasser auf und tropft unter kräftigem Rühren und Kühlen 175 g 50%ige KOH zu, wobei man die Temperatur bei 10°C hält. Die Mischung wird anschließend unter Rühren in einem Druckgefäß 3 bis 4 Stunden auf eine Temperatur von 130°C erhitzt. Nach Abkühlen rührt man die Lösung mit Salzäure leicht an und filtriert, falls erforderlich, von kleinen Mengen ausgeschiedener Phenylaminomethandiphosphonsäure ab und behandelt die Lösung mit einem Kationenaustauscher. Die so erhaltene Lösung der N - (1 - Sulfo - 2-hydroxypropan) - phenyl - aminomethan - diphosphonsäure wird eingedampft, der Rückstand 2 mal mit Methanol gewaschen und getrocknet.

Ausbeute: 73,9 g.
Analyse: gef.: N: 3,6 %, P: 15,1 %, S: 7,7 %
ber.: N: 3,46%, P: 15,29%, S: 7,91%

Beispiel 12

Analog zu Beispiel 11 erhält man mit 40 g 3 - Hydroxy - 4 - chlor - butan - 1 - sulfonsäure 71 g N - (Sulfo - hydroxybutan) - phenylaminomethan - diphosphonsäure.

Analyse: gef.: N: 3,5 %, P: 14,5 %, S: 7,8 %
ber.: N: 3,34%, P: 14,78%, S: 7,65%.

Beispiel 13

22 g 1,2 - Diaminoäthan - 1,1 - diphosphonsäure werden mit 23 g KOH in 100 ml Wasser gelöst und zusammen mit der Lösung von 40 g Kalium - 2,3 - epoxypropan - 1 - sulfonat in 100 ml Wasser 2 Stunden in einem Druckgefäß auf 130—135°C erhitzt. Man erhält auf diese Weise ein Gemisch von Kaliumsalzen verschiedener N - sulfo - hydroxypropan - Derivate der 1,2 - Diaminoäthan - 1,1 - diphosphonsäure, die ohne weitere Auftrennung für die genannten Einsatzgebiete verwendbar sind.

Beispiel 14

Eine Aufschlämmung von 20 g Zinkoxid in 400 ml Wasser wird mit 51 g 1 - Aminoäthan-1,1 - diphosphonsäure aufgekocht und anschließend mit 57 g einer 50%igen KOH versetzt. Zu der noch warmen Mischung (50—70°C) gibt man unter Rühren 50 g Kalium - 2,3 - epoxypropan - 1 - sulfonat, gelöst in 200 ml Wasser, und kocht 6 Stunden unter Rückfluß. Man erhält das Kalium-Zinksalz der N - Sulfo - hydroxypropan - 1-aminoäthan - 1,1 - diphosphonsäure, das sich besonders zum Einsatz in korrosionsgefährdeten Systemen eignet.

Weitere Beispiele 15—47 sind in der nachstehenden Tabelle zusammengefaßt.

| Bsp | Phosphonat | Sulfonat | Reaktionsprodukt | Nach Bsp. |
|---|---|---|---|---|
| 15 | Aminomethan-diphosphonsäure | 2,3-Epoxyhexan-1-sulfonat | N-Sulfo-hydroxyhexan-aminomethan-diphosphonsäure | 1 |
| 16 | ,, ,, | 2,3-Epoxydodekan-1-sulfonat | N-Sulfo-hydroxydodekan-aminomethan-diphosphonsäure | 1 |
| 17 | ,, ,, | 3-Hydroxy-4-chlor-butan-1-sulfonat | N(1-Sulfo-3-hydroxybutan)-aminomethan-diphosphonsäure | 6 |
| 18 | 1-Aminoäthan-1,1-diphosphonsäure | 3,4-Epoxybutan-1-sulfonat | N-Sulfo-hydroxybutan-1-aminoäthan-1,1-diphosphonat | 1 |
| 19 | ,, ,, | 2,3-Epoxyhexan-4-sulfonat | N-Sulfo-hydroxyhexan-1-aminoäthan-1,1-diphosphonat | 1 |
| 20 | ,, ,, | 9,10-Epoxyoctadekan-1-sulfonat | N(Sulfo-hydroxyoctadekan)-1-aminoäthan-1,1-diphosphonat | 1 |
| 21 | ,, ,, | 2-Methyl-2-hydroxy-3-chlorpropan-1-sulfonat | N-(1-Sulfo-2-methyl-2-hydroxypropan)-1-amino-äthan-1,1-diphosphonat | 6 |
| 22 | ,, ,, | 2-Hydroxy-3-chlor-butan-1-sulfonat | N-(1-Sulfo-2-hydroxy-butan) 1-aminoäthan-1,1-diphosphonat | 11 |
| 23 | 1-Amino-3-hydroxy-propan-1,1-diphosphonat | 2,3-Epoxypropan-1-sulfonat | N(Sulfo-hydroxypropan)-3-hydroxy-1-aminopropan-1,1-diphosphonat | 1 |
| 24 | ,, ,, | 1,2-Epoxyoctan-3-sulfonat | N(Sulfo-hydroxyoctan) 3-hydroxy-1-aminopropan-1,1-diphosphonat | 1 |
| 25 | ,, ,, | 9,10-Epoxyoctadekan-1-sulfonat | N(Sulfo-hydroxyocta-dekan) 3-hydroxy-1-aminopropan-1,1-diphosphonat | 1 |
| 26 | 1-Amino-2-hydroxy-propan-1,1-diphosphonat | 3-Hydroxy-4-chlor-butan-1-sulfonat | N(1-Sulfo-3-hydroxy-butan)-3-hydroxy-1-aminopropan-1,1-diphosphonat | 6 |
| 27 | 1-Aminopropan-1,1,3-triphosphonsäure | 2,3-Epoxypropan-1-sulfonat | N(Sulfo-hydroxypropan-1,1,3-triphosphonat | 5 |
| 28 | ,, ,, | 2,3-Epoxyhexan-1-sulfonat | N-(Sulfo-hydroxyhexan)-1-aminopropan-1,1,3-triphosphonat | 5 |
| 29 | ,, ,, | 2,3-Epoxydodekan-1-sulfonat | N(Sulfo-hydroxydodekan)-1-aminopropan-1,1,3-triphosphonat | 5 |

| Bsp | Phosphonat | Sulfonat | Reaktionsprodukt | Nach Bsp. |
|---|---|---|---|---|
| 30 | ,, ,, | 3-Hydroxy-4-chlor-butan-1-sulfonat | N(1-Sulfo-3-hydroxybutan)-1-aminopropan-1,1,3-triphosphonat | 11 |
| 31 | Phenylaminomethan-diphosphonat | 2,3-Epoxyhexan-1-sulfonat | N(Sulfohydroxyhexan) phenyl-aminomethan-diphosphonat | 1 |
| 32 | ,, ,, | 2,3-Epoxydodekan-1-sulfonat | N(Sulfo-hydroxydodekan)-phenylaminomethan-diphosphonat | 5 |
| 33 | ,, ,, | 2-Hydroxy-3-chlor-butan-1-sulfonat | N(1-Sulfo-2-hydroxybutan)-phenylaminomethan-diphosphonat | 6 |
| 34 | 2-Carboxy-1-amino-äthan-1,1-diphosphonsäure | 2,3-Epoxyhexan-4-sulfonat | N(Sulfo-hydroxyhexan)-2-carboxy-1-aminoäthan-1,1-diphosphonat | 1 |
| 35 | ,, ,, | 2,3-Epoxyoctan-3-sulfonat | N(Sulfo-hydroxyoctan) 2-carboxy-1-aminoäthan-1,1-diphosphonat | 1 |
| 36 | ,, ,, | 3-Hydroxy-4-chlor-butan-1-sulfonat | N-(1-Sulfo-3-hydroxybutan)-2-carboxy-1-aminoäthan-1,1-diphosphonat | 11 |
| 37 | ,, ,, | 2-Methyl-2-hydroxy-3-chlorpropan-1-sulfonat | N(1-Sulfo-2-methyl-2-hydroxypropan)2-carboxy-1-aminoäthan-1,1-diphosphonat | 11 |
| 38 | 1,2-Diaminoäthan-1,1-diphosphonat | 2,3-Epoxypropan-sulfonat | (Sulfo-hydroxypropan)-1,2-diaminoäthan-1,1-diphosphonate | 5 |
| 39 | ,, ,, | 2,3-Epoxyhexan-1-sulfonat | (Sulfo-hydroxyhexan)-1,2-diaminoäthan-1,1-diphosphonate | 5 |
| 40 | ,, ,, | 3-Hydroxy-4-chlor-butan-1-sulfonat | (Sulfo-hydroxybutan) 1,2-diaminoäthan-1,1-diphosphonate | 6 |
| 41 | ,, ,, | 2-Hydroxy-3-chlor-butan-1-sulfonat | (Sulfo-hydroxybutan) 1,2-diaminoäthan-1,1-diphosphonate | 6 |
| 42 | Aminomethan-phosphonat | 2,3-Epoxypropan-1-sulfonat | N-Sulfo-hydroxypropan-aminomethanphosphonsäure bzw. N,N-Bis(sulfo-hydroxypropan) amino-methanphosphonat | 1 |
| 43 | ,, ,, | 3-Hydroxy-4-chlor-butan-1-sulfonat | N(1-Sulfo-3-hydroxybutan)-aminomethanphosphonat bzw. N,N-Bis(1-sulfo-3-hydroxybutan)-amino-methanphosphonat | 5 |

| Bsp | Phosphonat | Sulfonat | Reaktionsprodukt | Nach Bsp. |
|---|---|---|---|---|
| 44 | Imino-bis(methanphosphonat) | 2,3-Epoxypropan-1-sulfonat | N(1-Sulfo-hydroxypropan)-imino-bis-methanphosphonat | 1 |
| 45 | ,, ,, | 3-Hydroxy-4-chlor-butan-1-sulfonat | N(1-Sulfo-3-hydroxybutan)-imino-bis-methanphosphonat | 6 |
| 46 | 2-Aminoäthan-1-phosphonat | 2,3-Epoxypropan-sulfonat | N-Sulfo-hydroxypropan-2-aminoäthan-1-phosphonat bzw. N,N-Bis(sulfo-hydroxy-propan) 2-aminoäthan-1-phosphonat | 5 |
| 47 | ,, ,, | 3-Hydroxy-4-chlor-butan-1-sulfonat | N-(1-Sulfo-3-hydroxybutan)-2-aminoäthan-1-phosphonat bzw. N,N-Bis(1-sulfo-3-hydroxybutan) 2-aminoäthan-1-phosphonat | 11 |

Es ist für den Fachmann selbstverständlich, daß die eingesetzten Reaktanden und die Reaktionsbedingungen wie Reaktionsdauer, Temperatur und Druck genauso wie die Art der Aufarbeitung, der Reinigung und der Überführung der Reaktionslösung in die freie N - Sulfohydroxyalkan - aminoalkan - phosphonsäure oder deren Salz im Rahmen der Prinzipien, die in der Beschreibung und in den Ansprüchen wiedergegeben werden, variiert werden können. Vorzugsweise werden zur Freisetzung der erfindungsgemäßen N - Sulfohydroxyalkan - aminoalkan - phosphonsäuren stark saure Kationenaustauscher wie beispielsweise sulfonierte Polymerisate von Styrol, Divinylbenzol oder dergleichen benutzt.

Wie in der Beschreibungseinleitung ausgeführt, können die neuen N - Sulfohydroxyalkan - aminoalkan - phosphonsäuren und deren Alkalisalze genau wie ihre Reaktionslösungen oder die Mutterlaugen, die nach Abscheidung der kristallinen Säuren zurückbleiben, dazu verwendet werden, die störenden oder schädlichen Effekte der Härtebildner des Wassers zu eliminieren oder zu unterdrücken, oder die Wirkung polyvalenter Metallionen in den wäßrigen Medien zu eliminieren.

Dank ihrer hohen Sequestrierkraft können sie vorteilhaft dazu verwendet werden, die Bildung von Kesselstein und Niederschlägen in wäßrigen Systemen zu verhindern, und können demzufolge vorteilhaft beispielsweise in Bleichbädern für Textilien, in Wasser, das zur Sterilisation von Dosen benutzt wird, zur Verhinderung der Bildung von harzartigen Niederschlägen bei der Erzeugung von Papier und dergleichen eingesetzt werden.

Die erfindungsgemäßen Phosphonsäuren können auch als Sequestrier-, Komplexier und/oder Chelatisiermittel für andere Zwecke verwendet werden, beispielsweise in Peroxid-Bleichbädern, oder in Bädern zur Behandlung Cellulose-fasermaterialien, wie überhaupt für Zwecke, für die bisher Phosphonsäuren benutzt wurden. Wenn es gewünscht wird, können Salze wie Alkalisalze, Zinksalze, Ammoniumsalze oder deren Lösungen anstelle der freien Säuren verwendet werden. Die Salze können beispielsweise durch Neutralisation der Säuren mit entsprechenden Mengen von Alkalihydroxyden, Ammoniak oder organischen Aminen erzeugt werden.

Die folgenden Beispiele 48—50 illustrieren die Art und Weise, in der die erfindungsgemäßen Sulfohydroxyalkanaminoalkanphosphonsäuren eingesetzt werden können, ohne daß durch die Beispiele der gesamte Anwendungsbereich dieser Säuren beschränkend wiedergegeben würde.

Beispiel 48

Der folgende Versuch wurde in einem aufrecht stehenden Autoklaven einer Kapazität von 10 l Wasser durchgeführt. Der Autoklav wurde bei 4 at und bei einer Temperatur von 140°C betrieben. Der Autoklav wurde mit üblichen verzinnten Dosen beladen.

Für die Sterilisation wurde Leitungswasser der folgenden Zusammensetzung benutzt:

| | |
|---|---|
| Gesamthärte | 25° d |
| Carbonathärte | 17° d |
| Chloride | 53 mg/l |
| Sulfate | 85 mg/l |
| Freies Kohlendioxid | 40 mg/l |
| Gebundenes Kohlendioxid | 125 mg/l |
| ph-Wert | 7.2 |

Vor der Sterilisation der Dosen wurden dem Wasser 5 ml einer 30%igen Lösung von N-(Sulfohydroxypropan) - 1 - aminoäthan - 1,1-diphosphonsäure zugesetzt. Die Zugabe dieser Phosphonsäure bewirkte, daß nicht nur die Dosen, sondern auch der Autoklav von Kesselstein frei blieb. Die Dosen wiesen eine blanke glänzende Oberfläche auf.

Beispiel 49

250 g einer gebleichten Sulfitpulpe, die dafür bekannt ist, wegen der Bildung von harzartigen Niederschlägen in den Papiermaschinen ständig Probleme zu bereiten, wurde zu einer 3%igen Suspension in Wasser vermahlen. Die erhaltene Vorratssuspension wurde in einem Mahlholländer auf etwa 78° Schoeppler-Riegler vermahlen; d.h. derart, daß ein gutgemahlener Brei erhalten wurde, der geeignet war, dichte Blätter eines pergamentartigen Papiers herzustellen. Der pH-Wert des erhaltenen Breis betrug 6.0. Bevor das Mahlen begann, wurden 0.5 kg des Tetranatriumsalzes der N - (Sulfohydroxypropan) - 2-carboxy - 1 - aminoäthan - 1,1 - diphosphonsäure zu dem Brie in dem Mahlholländer zugegeben. Nach dem Mahlen und Raffinieren wurden weitere 0,8 kg derselben Phosphonsäure zugemischt.

Durch diese Vorgehen wurden keine harzartigen Niederschläge an den Wänden des Mahlholländers, in den Rohrleitungen und nachfolgend in den Papiermaschinen gebildet.

Beispiel 50

Dieses Beispiel betrifft die Behandlung von Wasser, das zur Sterilisation von Dosen benutzt wird.

In einen 10 l Autoklaven werden verzinnte Dosen eingefüllt. Für die Sterilisation der Dosen wird Leitungswasser mit den folgenden Eigenschaften verwendet:

| | |
|---|---|
| Gesamthärte | 25° d |
| Karbonathärte | 17° d |
| Chloride | 53 mg/l |
| Sulfate | 85 mg/l |
| Freies Kohlendioxid | 40 mg/l |
| Gebundenes Kohlendioxid | 125 mg/l |
| pH-Wert | 7.2 |

0,25 g/l N - (Sulfohydroxyphenylpropan) - 1-aminoäthan - 1,1 - diphosphonsäure wurden dem Leitungswasser zugesetzt. Die Sterilisation wird durch Erhitzen auf 140°C bei etwa 4 at bewirkt. Die Zugabe der Phosphonsäureverbindung verhindert Kesselstein- und Niederschlagsbildung sowohl an den Dosen als auch an den Autoklaven wänden.

Ähnliche oder identische Resultate wie in den Beispielen 48 bis 50 wurden erhalten, wenn andere der in den Beispielen beschriebenen N - Sulfohydroxyalkan - aminoalkanphosphonsäuren eingesetzt wurden.

**Patentansprüche:**

1. N - Sulfohydroxyalkan - aminoalkanphosphonsäuren der allgemeinen Formel 1

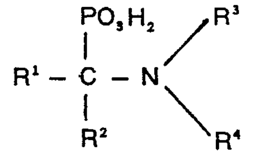

(1)

bei der die Reste wie folgt definiert sind:

$R^1$: ein Wasserstoffatom, ein Alkylrest mit 1 bis 11 Kohlenstoffatomen, ein Arylrest, ein Aralkylrest, ein Cycloalkylrest, ein niedriger Aminoalkylenrest, ein niedriger Hydroxyalkylenrest, ein niedriger Carboxyalkylenrest oder ein niedriger Alkylphosphonsäurerest.

$R^2$: ein Wasserstoffatom oder die Phosphonsäuregruppe $—PO_3H_2$.

$R^3$: ein Hydroxyalkansulfonsäurerest der Formel $C_nH_{2n-1}(OH)SO_3H$ oder ein niedriger Alkylphosphonsäurerest, wobei n die Werte 3 bis 18 annehmen kann.

$R^4$: ein Wasserstoffatom, wenn $R^3$ nicht gleichzeitig ein niedriger Alkylphosphonsäurerest ist, oder ein Hydroxyalkansulfonsäurerest der Formal $C_nH_{2n-1}(OH)SO_3H$, wobei n die Werte 3 bis 18 annehmen kann, sowie ihre Salze.

2. N - Sulfohydroxyalkan - aminoalkanphosphonsäuren nach Anspruch 1, bei denen $R^1$ einer der folgenden Reste ist: ein Wasserstoffatom, ein Methylrest, ein Äthylrest, ein Butylrest, ein Hexylrest, ein Octylrest, ein Undecylrest, ein Aminomethylenrest, ein Hydroxymethylenrest, ein Hydroxyäthylenrest, ein Carboxymethylenrest oder ein Äthylphosphonsäurerest, und bei denen die Reste $R^2$, $R^3$ und $R^4$ wie unter Anspruch 1 angegeben definiert sind.

3. Verfahren zur Herstellung von N - Sulfohydroxyalkan - aminoalkanphosphonsäuren der Formal 1

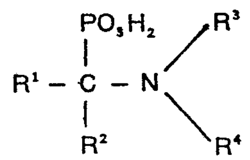

(1)

bei der die Reste wie folgt definiert sind:

$R^1$: ein Wasserstoffatom, ein Alkylrest mit 1 bis 11 Kohlenstoffatomen, ein Arylrest, ein Aralkylrest, ein Cycloalkylrest, ein niedriger Aminoalkylenrest, ein niedriger Hydroxyalkylenrest, ein niedriger Carboxyalkylenrest oder ein niedriger Alkylphosphonsäurerest.

$R^2$: ein Wasserstoffatom oder die Phosphonsäuregruppe $—PO_3H_2$.

$R^3$: ein Hydroxyalkansulfonsäurerest der Formel $C_nH_{2n-1}(OH)SO_3H$ oder ein niedriger Alkylphosphonsäurerest, wobei n die Werte 3 bis 18 annehmen kann.

$R^4$: ein Wasserstoffatom, wenn $R^3$ nicht gleichzeitig ein niedriger Alkylphosphonsäurerest ist, oder ein Hydroxyalkansulfonsäurerest der Formel $C_nH_{2n-1}(OH)SO_3H$, wobei n die

Werte 3 bis 18 annehmen kann, durch Umsetzung eines Salzes einer Aminoalkanphosphonsäure der allgemeinen Formel 2

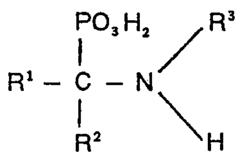

(2)

bei der die Reste wie folgt definiert sind:

$R^1$: ein Wasserstoffatom, ein Alkylrest mit 1 bis 11 Kohlenstoffatomen, ein Arylrest, ein Aralkylrest, ein Cycloalkylrest, ein niedriger Aminoalkylenrest, ein niedriger Hydroxyalkylenrest, ein niedriger Carboxyalkylenrest oder ein niedriger Alkylphosphonsäurerest.

$R^2$: ein Wasserstoffatom oder die Phosphonsäuregruppe $—PO_3H_2$.

$R^3$: ein Wasserstoffatom oder ein niedriger Alkylphosphonsäurerest,

in alkalischer Lösung mit einem Salz einer halogensubstituierten Alkansulfonsäure oder einer Epoxyalkansulfonsäure, deren Alkanketten 3 bis 18 Kohlenstoffatome aufweisen, in einem molaren Verhältnis von 1:1 bis 1:2 von Phosphonsäurereakcand zu Sulfonsäurereaktand bei erhöhten Temperaturen.

4. Verfahren nach Anspruch 3, dadurch gekennzeichnet, daß in einem zusätzlichen Schritt die entstandene N-Sulfohydroxyalkanaminoalkan-phosphonsäure aus der Reaktionsmischung isoliert wird.

5. Verfahren nach Anspruch 3, dadurch gekennzeichnet, daß die Reaktionsmischung am Rückfluß gekocht wird.

6. Verfahren nach Anspruch 3, dadurch gekennzeichnet, daß die Reaktionsmischung unter Druck auf eine Temperatur zwischen 110° und 130°C erhitzt wird.

7. Verfahren nach Anspruch 3, dadurch gekennzeichnet, daß die Reaktion in alkalischer Lösung mit einem pH-Wert höher als 9,0 durchgeführt wird.

8. Verfahren nach Anspruch 3, dadurch gekennzeichnet, daß der Aminoalkanphosphonsäurereaktand eine Aminoalkanphosphonsäure der allgemeinen Formel 2 ist,

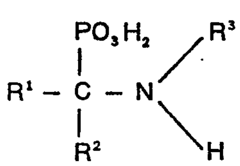

(2)

in der die Reste wie folgt definiert sind:

$R^1$: ein Wasserstoffatom, ein Methylrest, ein Äthylrest, ein Butylrest, ein Hexylrest, ein Octylrest, ein Undecylrest, ein Phenylrest, ein Aminomethylenrest, Hydroxymethylenrest, ein Hydroxyäthylenrest, Carboxymethylenrest oder ein Äthylphosphonsäurerest.

$R^2$: ein Wasserstoffatom oder ein Phosphonsäurerest $—PO_3H_2$.

$R^3$: ein Wasserstoffatom oder ein Methylphosphonsäurerest.

9. Verfahren nach Anspruch 3, dadurch gekennzeichnet, daß ein Alkalisalz einer Aminoalkanphosphonsäure mit einem Alkalisalz einer Halogenhydroxyalkansulfonsäure umgesetzt wird.

10. Verfahren nach Anspruch 9, dadurch gekennzeichnet, daß ein Alkalisalz einer Aminoalkanphosphonsäure mit einem Alkalisalz einer Epoxyalkansulfonsäure umgesetzt wird.

11. Verwendung der Verbindungen gemäß Anspruch 1 in reiner Form oder in Form der rohen Reaktionslösungen in Verfahren zur Behandlung wäßriger Systeme mit dem Zwecke der Beseitigung der nachteiligen Effekte von mehrwertigen Metallionen.

**Revendications**

1. Acides [N - (sulfo - hydroxy - alkyl)-amino] - alcane - phosphoniques répondant à la formule générale 1

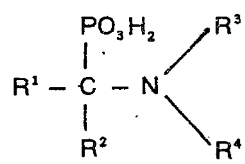

(1)

dans laquelle:

$R^1$ représente un atome d'hydrogène, un radical alkyle contenant de 1 à 11 atomes de carbone, un radical aryle, un radical aralkyle, un radical cycloalkyle, un radical aminoalkylène inférieur, un radical hydroxyalkylène inférieur, un radical carboxyalkylène inférieur ou un radical d'acide alkyl-phosphonique inférieur,

$R^2$ représente un atome d'hydrogène ou le groupe phosphonique $—PO_3H_2$,

$R^3$ représente un radical d'acide hydroxyalcane-sulfonique $C_nH_{2n-1}(OH)SO_3H$ dans lequel n désigne un nombre de 3 à 18, ou représente un radical d'acide alkyl-phosphonique inférieur, et

$R^4$ représente un atome d'hydrogène lorsque $R^3$ ne représente pas en même temps un radical d'acide alkyl-phosphonique inférieur, ou représente un radical d'acide hydroxyalcane-sulfonique $C_nH_{2n-1}(OH)SO_3H$ dans lequel n désigne un nombre de 3 à 18,

ainsi que leurs sels.

2. Acides [N - (sulfo - hydroxy - alkyl)-amino] - alcane - phosphoniques selon la revendication 1, dans lesquels $R^1$ représente un atome d'hydrogène, un radical méthyle, un radical éthyle, un radical butyle, un radical hexyle, un radical octyle, un radical undécyle, un radical aminométhylène, un radical hydroxyméthylène, un radical hydroxy-éthylène, un radical carboxy-méthylène ou un radical d'acide éthyl-phosphonique, et dans lesquels les

symboles $R^2$, $R^3$ et $R^4$ ont les significations données à la revendications 1.

3. Procédé de préparation d'acides [N-(sulfo - hydroxy - alkyl) - amino] - alcane-phosphoniques répondant à la formule 1

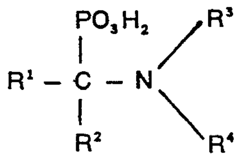

(1)

dans laquelle:

$R^1$ représente un atome d'hydrogène, un radical alkyle contenant de 1 à 11 atomes de carbone, un radical aryle, un radical aralkyle, un radical cycloalkyle, un radical aminoalkylène inférieur, un radical hydroxy-alkylène inférieur, un radical carboxyalkylène inférieur ou un radical d'acide alkyl-phosphonique inférieur,

$R^2$ représente un atome d'hydrogène ou le groupe phosphonique $—PO_3H_2$,

$R^3$ représente un radical d'acide hydroxy-alcane-sulfonique $C_nH_{2n-1}(OH)SO_3H$ dans lequel n désigne un nombre de 3 à 18, ou représente un radical d'acide alkyl-phosphonique inférieur, et

$R^4$ représente un atome d'hydrogène lorsque $R^3$ ne représente pas en même temps un radical d'acide alkyl-phosphonique inférieur, ou représente un radical d'acide hydroxy-alcane-sulfonique $C_nH_{2n-1}(OH)SO_3H$ dans lequel n désigne un nombre de 3 à 18,

par réaction d'un sel d'un acide amino-alcane-phosphonique répondant à la formule générale 2

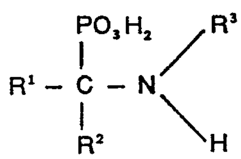

(2)

dans laquelle:

$R^1$ représente un atome d'hydrogène, un radical alkyle contenant de 1 à 11 atomes de carbone, un radical aryle, un radical aralkyle, un radical cycloalkyle, un radical aminoalkylène inférieur, un radical hydroxy-alkylène inférieur, un radical carboxyalkyllène inférieur ou un radical d'acide alkyl-phosphonique inférieur,

$R^2$ représente un atome d'hydrogène ou un groupe phosphonique $—PO_3H_2$, et

$R^3$ représente un atome d'hydrogène ou un radical d'acide alkyl-phosphonique inférieur,

en solution alcaline, avec un sel d'un acide alcanesulfonique halogéné ou d'un acide époxy-alcane-sulfonique dont les chaînes alcanes contiennent de 3 à 18 atomes de carbone, dans un rapport molaire de 1:1 à 1:2 entre le réactif acide phosphonique et le réactif acide sulfonique, à températures élevées.

4. Procédé selon la revendication 3, caractérisé en ce que, dans une étape supplémentaire, on isole du mélange réactionnel l'acide [N - (sulfo - hydroxyalkyl) - amino] - alcane-phosphonique.

5. Procédé selon la revendication 3, caractérisé en ce qu'on fait bouillir à reflux le mélange réactionnel.

6. Procédé selon la revendication 3, caractérisé en ce qu'on chauffe le mélange réactionnel sous pression à une température comprise entre 110 et 130°C.

7. Procédé selon la revendication 3, caractérisé en ce qu'on effectue la réaction en solution alcaline à un pH supérieur à 9,0.

8. Procédé selon la revendication 3, caractérisé en ce que le réactif acide amino-alcane-phosphonique est un acide amino-alcane-phosphonique répondant à la formule générale 2

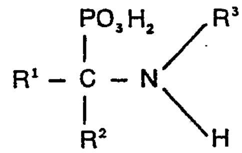

(2)

dans laquelle:

$R^1$ représente un atome d'hydrogène, un radical méthyle, un radical éthyle, un radical butyle, un radical hexyle, un radical octyle, un radical undécyle, un radical phényle, un radical aminométhylène, un radical hydroxy-méthylène, un radical hydroxy-éthylène, un radical carboxy-méthylène ou un radical d'acide éthyl-phosphonique,

$R^2$ représente un atome d'hydrogène ou un groupe phosphonique $—PO_3H_2$, et

$R^3$ représente un atome d'hydrogène ou un radical d'acide méthyl-phosphonique.

9. Procédé selon la revendication 3, caractérisé en ce qu'on fait réagir un sel de métal alcalin d'un acide amino-alcane-phosphonique avec un sel de métal alcalin d'un acide halogéno-hydroxy-alcane-sulfonique.

10. Procédé selon la revendication 9, caractérisé en ce qu'on fait réagir un sel de métal alcalin d'un acide amino-alcane-phosphonique avec un sel de métal alcalin d'un acide époxy-alcane-sulfonique.

11. Application des composés selon la revendication 1, à l'état pur ou sous forme des solutions réactionnelles brutes, dans des procédés pour le traitement de systèmes aqueux aux fins d'éliminer les effets nuisibles des ions métalliques multivalents.

**Claims**

1. N - sulphohydroxyalkane - aminoalkanephosphonic acids of the general formula 1

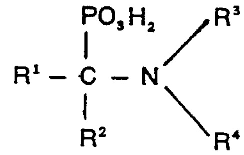

(1)

in which the radicals are defined as follows:

$R^1$: a hydrogen atom, an alkyl radical with 1 to 11 carbon atoms, an aryl radical, an aralkyl radical, a cycloalkyl radical, a lower aminoalkyl radical, a lower hydroxyalkyl radical, a lower carboxyalkyl radical or a lower phosphonoalkyl radical.

$R^2$: a hydrogen atom or the phosphonic acid group $-PO_3H_2$.

$R^3$: a hydroxyalkanesulphonic acid radical of the formula $C_nH_{2n-1}(OH)SO_3H$ or a lower phosphonalkyl radical, wherein *n* can have the values 3 to 18.

$R^4$: a hydrogen atom if $R^3$ is not simultaneously a lower phosphonoalkyl radical, or a hydroxyalkanesulphonic acid radical of the formula $C_nH_{2n-1}(OH)SO_3H$, wherein *n* can have the values 3 to 18, as well as their salts.

2. N - sulphohydroxyalkane - aminoalkanephosphonic acids according to claim 1, in which $R^1$ is one of the following radicals: a hydrogen atom, a methyl radical, an ethyl radical, a butyl radical, a hexyl radical, an octyl radical, an undecyl radical, an aminomethyl radical, a hydroxymethyl radical, a hydroxyethyl radical, a carboxymethyl radical or a phosphonoethyl radical and in which the radicals $R^2$, $R^3$ and $R^4$ are as defined in claim 1.

3. A process for preparing N - sulphohydroxyalkane - amino - alkanephosphonic acids of the formula 1

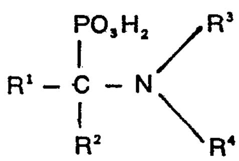

(1)

in which the radicals are defined as follows:

$R^1$: a hydrogen atom, an alkyl radical with 1 to 11 carbon atoms, an aryl radical, an aralkyl radical, a cycloalkyl radical, a lower aminoalkyl radical, a lower hydroxyalkyl radical, a lower carboxyalkyl radical or a lower phosphonoalkyl radical.

$R^2$: a hydrogen atom or the phosphonic acid group $-PO_3H_2$.

$R^3$: a hydroxyalkanesulphonic acid radical of the formula: $C_nH_{2n-1}(OH)SO_3H$ or a lower phosphonoalkyl acid radical, wherein *n* can have the values 3 to 18.

$R^4$: a hydrogen atom if $R^3$ is not simultaneously a lower phosphonoalkyl radical, or a hydroxyalkanesulphonic acid radical of the formula $C_nH_{2n-1}(OH)SO_3H$, wherein *n* can have the values 3 to 18,

by reacting a salt of an aminoalkanephosphonic acid of the general formula 2

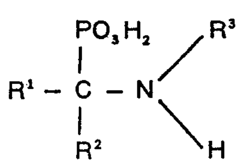

(2)

in which the radicals are defined as follows:

$R^1$: a hydrogen atom, an alkyl radical with 1 to 11 carbon atoms, an aryl radical, an aralkyl radical, a cycloalkyl radical, a lower aminoalkyl radical, a lower hydroxyalkyl radical, a lower carboxyalkyl radical or a lower phosphonoalkyl radical,

$R^2$: a hydrogen atom or the phosphonic acid group $-PO_3H_2$.

$R^3$: a hydrogen atom or a lower phosphonoalkyl radical, in alkaline solution with a salt of a halogen-substituted alkanesulphonic acid or an epoxyalkanesulphonic acid, whose alkane chains contain 3 to 18 carbon atoms, in a molar ratio of phosphonic acid reactant to sulphonic acid reactant of 1:1 to 1:2, at elevated temperatures.

4. A process according to claim 3, characterised in that the N - sulphohydroxyalkane-aminoalkane - phosphonic acid formed is isolated from the reaction mixture in an additional stage.

5. A process according to claim 3, characterised in that the reaction mixture is boiled under reflux.

6. A process according to claim 3, characterised in that the reaction mixture is heated under pressure at a temperature between 110 and 130°C.

7. A process according to claim 3, characterised in that the reaction is carried out in alkaline solution at a pH-value higher than 9.0.

8. A process according to claim 3, characterised in that the aminoalkanephosphonic acid reactant is an aminoalkanephosphonic acid of the general formula 2

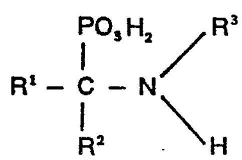

(2)

in which the radicals are defined as follows:

$R^1$: a hydrogen atom, a methyl radical, an ethyl radical, a butyl radical, hexyl radical, an octyl radical, an undecyl radical, a phenyl radical, an aminomethyl radical, a hydroxymethyl radical, a hydroxyethyl radical, a carboxymethyl radical or a phosphonoethyl radical.

$R^2$: a hydrogen atom or a phosphonic acid radical $-PO_3H_2$.

$R^3$: a hydrogen atom or a phosphonomethyl radical.

9. A process according to claim 2, characterised in that an alkali salt of an aminoalkanephosphonic acid is reacted with an alkali salt of a halogenated hydroxyalkanesulphonic acid.

10. A process according to claim 9, characterised in that an alkali salt of an aminoalkanephosphonic acid is reacted with an alkali salt of an epoxyalkanesulphonic acid.

11. The use of the compounds according to

claim 1 in the pure form or in the form of crude reaction solutions in methods for treating aqueous systems with the object of eliminating the undesirable effects of polyvalent metal ions.